(19) Europäisches Patentamt
European Patent Office
Office européen des brevets

(11) **EP 1 840 660 A2**

(12) **EUROPEAN PATENT APPLICATION**

(43) Date of publication:
**03.10.2007 Bulletin 2007/40**

(51) Int Cl.:
*G03G 9/107* (2006.01)    *G03G 9/113* (2006.01)
*H01F 1/11* (2006.01)

(21) Application number: **07006589.1**

(22) Date of filing: **29.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **30.03.2006 JP 2006093674**

(71) Applicant: **Powdertech Co., Ltd.**
**Kashiwa-shi,**
**Chiba 277-8557 (JP)**

(72) Inventors:
• **Sugiura, Takao**
  **Kashiwa-shi**
  **Chiba 277-8557 (JP)**
• **Kayamoto, Kanao**
  **Kashiwa-shi**
  **Chiba 277-8557 (JP)**

(74) Representative: **Bohmann, Armin K.**
**Bohmann & Loosen**
**Anwaltssozietät**
**Nymphenburger Strasse 1**
**80335 München (DE)**

(54) **Ferromagnetic material powder, carrier for electrophotographic developer, process for producing them and electrophotographic developer**

(57)    A ferromagnetic material powder comprising a magnetic oxide which is a complex of a magnetite phase and a ferrite phase, wherein the ferromagnetic material powder has a spinel crystal structure and a magnetoplumbite crystal structure, and in the spinel crystal structure, the content of $Fe^{3+}$ in site A is 35 to 50% and the content of $Fe^{2+}$ in site B is 30 to 45%, a carrier for an electrophotographic developer, a process for producing them and an electrophotographic developer.

**EP 1 840 660 A2**

**Description**

BACKGROUND OF THE INVENTION

Field of the Invention

The present invention relates to a ferromagnetic material powder, a carrier for an electrophotographic developer, a process for producing them and an electrophotographic developer.

Description of the Related Art

Two-component developers used in electrophotography are composed of a toner and a carrier. The carrier is a substance mixed with toner in a developing box by stirring, which provides toner with intended charge and carries the charged toner to an electrostatic latent image on a photocoducter to form a toner image. The carrier remains on a magnet, returns to the developing box and then is mixed with fresh toner by stirring to be repeatedly used.

Thus, to keep desired image qualities stable during repeated printing, it is required that properties of the carrier are stable during use.

Recently, in two-component developing systems, magnetite carriers and ferrite carriers have been used instead of conventional oxide-coated iron powder or resin-coated iron powder to obtain high quality images.

Inparticular, with recent popularization of digital full color copying machines and printers, high bias voltage is applied since most of these developing systems involve a reversal developing system, and thus a carrier core having relatively high resistance is required , and high quality images with high image density and good gradation or the like are needed in development.

Due to the low resistance of the core, a leak phenomenon occurs in magnetite carriers, and solid image cannot be uniformly reproduced. Also, many brush mark are formed on the image, resulting in image defects such as distortion of narrow line images.

To cover the aforementioned problem of magnetite carriers, various improvements have been made to increase the resistance . In all methods, basically high resistance is achieved by increasing the hematite phase in the magnetite phase. However, the increase of the hematite phase, which is a nonmagnetic component, results in generation of low magnetization particles and carrier adhesion in development. For this reason, the ratio of increase of the hematite phase in the magnetite phase must be kept small, and since the magnetite phase is dominant, the resistance remains low when high bias voltage is applied although the resistance is high at a low bias voltage, and a leak phenomenon is observed in development, resulting in generation of image defects.

On the other hand, since ferrite carriers have high resistance, electrostatic latent image potential on a photoconductor does not leak to the carrier in development, and no defect such as brush marks is found. Also, since ferrite carriers are composed of a high order oxide, degradation is not found during use and there is an advantage that the life of such carriers is long.

However, due to the high core resistance, the region which produces a desired image density is low, and there is a defect that solid image with high density cannot beproduced at initial stages.

Under such circumstances, complex carriers in which magnetite is included in ferrite described above are proposed.

For example, Japanese Patent Laid-Open No. 9-134036 proposes that a stable state of charge of toner is achieved in a charging process in a short time without overcharge by adding 0.1 to 10% by weight of a magnetite phase in light metal ferrite.

However, these conventional complex magnetic powders composed of a ferrite phase and a magnetite phase often cause beads carry over due to ill-balance of the magnetization of magnetized particles, and in addition, image defects such as occurrence of a leak phenomenon due to conductivity of the magnetite phase are caused. Moreover, alkali metal ferrite lacks environmental stability, has greatly fluctuating charging properties and cannot produce stable images. Thus, a satisfactory carrier is not available at present.

Also, Japanese Patent Laid-Open No.2003-34533 discloses a ferromagnetic material powder, which is a magnetic oxide of a mixture of a magnetite phase and a ferrite phase, having a ratio of divalent iron of 1.0 to 32.0 relative to the whole iron and containing a magnetoplumbite form in the ferrite phase.

However, for preparing the ferromagnetic material powder, a sintering aid is added in the production process and in order to exert the effect of the aid, a main baking step is performed without a binder removing step. Because of this, the ferromagnetic material powder has a problem that the particle strength is poor. Accordingly, a developer using the ferromagnetic material powder as a carrier core causes a problem that carrier particles are crushed due to stress of stirring in an actual machine and the crushed particles cause beads carry over.

Also, in such a production process, the sintering aid, the binder, the dispersant and the like added in granulation are decomposed when the temperature is increased in the main baking step, and in practical cases, the generated gas promotes deterioration of refractory lining, making it difficult to carry out stable production in actual operation.

SUMMARY OF THE INVENTION

Accordingly, an object of the present invention is to provide a ferromagnetic material powder capable of maintaining the ratio of scattering magnetization to main magnetization, the core resistance and the strength at high levels when formed into a carrier core, a process for producing the same, a carrier for an electrophotographic developer using the ferromagnetic material powder and a process for producing the same, and an electrophotographic developer which has excellent image density and hardly causes beads carry over or a leak phenomenon.

The present inventors have conducted studies to solve the problems and as a result, have found that the problems can be solved by using a ferromagnetic material powder comprising a magnetic oxide which is a complex of a magnetite phase and a ferrite phase, wherein the ferromagnetic material powder has a spinel crystal structure and a magnetoplumbite crystal structure and the content of $Fe^{3+}$ in site A and the content of $Fe^{2+}$ in site B in the spinel crystal structure are in certain ranges as a carrier for an electrophotographic developer or a carrier core, and that such a ferromagnetic material powder can be produced by performing binder removing treatment without using a sintering aid, and the present invention has been completed.

Accordingly, the present invention provides a ferromagnetic material powder comprising a magnetic oxide which is a complex of a magnetite phase and a ferrite phase, the ferromagnetic material powder having a spinel crystal structure and a magnetoplumbite crystal structure, and in the spinel crystal structure, a content of $Fe^{3+}$ in site A being 35 to 50% and a content of $Fe^{2+}$ in site B being 30 to 45%.

Preferably, the ferromagnetic material powder of the present invention has a ratio of generation of hematite in a surface layer of 90% or less.

Preferably, the ferromagnetic material powder of the present invention has a ratio of scattering magnetization to main magnetization of 0.8 or more.

Preferably, the ferromagnetic material powder of the present invention comprises a group 2 element in the periodic table as an element constituting the ferrite phase.

Preferably, the ferromagnetic material powder of the present invention comprises Sr and/or Ba as an element constituting the magnetoplumbite crystal structure.

Preferably, the ferromagnetic material powder of the present invention has a raw material slurry particle size $(D_{50})$ of 1.0 $\mu$m or less.

Preferably, the ferromagnetic material powder of the present invention has a strength of 75% or more.

Preferably, the ferromagnetic material powder of the present invention has a saturation magnetization of 30 to 80 A$\cdot$m$^2$/kg (emu/g).

Preferably, the ferromagnetic material powder of the present invention has an average particle size of 20 to 100 $\mu$m.

Preferably, the ferromagnetic material powder of the present invention has a resistance of $1.0 \times 10^6$ to $1.0 \times 10^{11}$ $\Omega$.

The present invention also provides a carrier for an electrophotographic developer comprising the ferromagnetic material powder as a core and a resin with which the surface of the ferromagnetic material powder is coated.

In the carrier for an electrophotographic developer of the present invention, the amount of coating of the resin is 0.05 to 10% by weight.

The present invention also provides a process for producing a ferromagnetic material powder, comprising pulverizing a raw material mixture containing hematite and another metal oxide to a slurry particle size $(D_{50})$ of 1.0 $\mu$m or less, granulating, performing binder removing treatment, and then baking at 1100 to 1400°C in an inert atmosphere.

The process for producing a ferromagnetic material powder of the present invention further comprises surface treatment in an oxidizing atmosphere after baking.

The present invention also provides a process for producing a carrier for an electrophotographic developer, comprising coating the surface of the ferromagnetic material powder obtained by the process with a resin.

The present invention also provides an electrophotographic developer comprising the carrier and a toner.

The ferromagnetic material powder of the present invention comprises a magnetic oxide which is a complex of a magnetite phase and a ferrite phase, wherein the ferromagnetic material powder has a spinel crystal structure and a magnetoplumbite crystal structure and the content of $Fe^{3+}$ in site A and the content of $Fe^{2+}$ in site B in the spinel crystal structure are in certain ranges. Therefore, when formed into a carrier core, the ratio of scattering magnetization to main magnetization, the core resistance and the strength can be kept at high levels. Thus, in the electrophotographic developer comprising a carrier using the ferromagnetic material powder of the present invention, carrier adhesion is suppressed, and high quality images can be obtained without a leak phenomenon.

Also, the process of the present invention makes it possible to produce the ferromagnetic material powder and the carrier for an electrophotographic developer economically in a stable manner.

DETAILED DESCRIPTION OF THE PREFERRED EMBODIMENTS

In the following, embodiments of the present invention are described.

The ferromagnetic material powder of the present invention comprises a magnetic oxide which is a complex of a magnetite phase and a ferrite phase, the ferromagnetic material powder having a spinel crystal structure and a magnetoplumbite crystal structure, and in the spinel crystal structure, a content of $Fe^{3+}$ in site A being 35 to 50% and a content of $Fe^{2+}$ in site B being 30 to 45%.

The ferrite as used herein means ferrite other than magnetite that is iron ferrite.

The content of $Fe^{3+}$ in site A and the content of $Fe^{2+}$ in site B are measured by Moessbauer spectroscopy. Moessbauer spectroscopy is a method of measuring an absorption spectrum of $\gamma$ rays utilizing the Moessbauer effect (phenomenon of resonance absorption of $\gamma$ rays by atomic nuclei). Generally, an absorption spectrum by $^{57}Fe$ (naturally contained 2.2%) is measured and the data of oxidization and bonding of iron is obtained.

The site A and the site B in the present invention refer to the positions in which metal ions are stored in a crystal structure forming a spinel. The spinel crystal structure means a crystal structure similar to spinel, a natural mineral belonging to cubic crystals. Oxygen ions form a close-packed cubic lattice and metal ions are disposed in two sites. Site A is surrounded by a tetrahedron composed of 4 oxygen atoms and site B is surrounded by a octahedron composed of 6 oxygen atoms. The content of $Fe^{3+}$ in site A and the content of $Fe^{2+}$ in site B in the present invention refer to the ratio relative to the whole Fe components in the spinel crystal structure.

The measurement method of Moessbauer spectroscopy is called a transmission method and measures the content of $Fe^{3+}$ in site A and the content of $Fe^{2+}$ in site B. Measurement was performed under the following conditions.

- Measurement sample: about 100 mg of a sample is collected and spread on filter paper and filter paper is put thereon; pressure molding is performed and the resultant is set in a sample cell.
- Transition used: transition of $^{57}Fe$ from ground state to lowest excitation state
- Environment of measurement of sample: constant acceleration mode, room temperature, normal pressure, air
- $\gamma$ ray source: $^{57}Co/Rh$ matrix

In the ferromagnetic material powder of the present invention, when the content of $Fe^{3+}$ in site A or the content of $Fe^{2+}$ in site B is increased, the electric resistance of the ferromagnetic material powder is reduced and the saturation magnetization is increased. Use of a ferromagnetic material powder in which the content of $Fe^{3+}$ in site A is more than 50% or the content of $Fe^{2+}$ in site B is more than 45% as a carrier is not preferred because a leak phenomenon occurs and the magnetic brush becomes hard due to high magnetization in development, and therefore brush marks are produced or roughness is caused, failing to give high quality developed images. Further, when the content of $Fe^{3+}$ in site A or the content of $Fe^{2+}$ in site B is decreased, the electric resistance of the ferromagnetic material powder is increased and the saturation magnetization is reduced. Use of a ferromagnetic material powder in which the content of $Fe^{3+}$ in site A is less than 35% or the content of $Fe^{2+}$ in site B is less than 30% as a carrier is not preferred because image density is difficult to achieve due to high resistance and beads carry over tends to occur due to low saturation magnetization.

Thus, by setting the content of $Fe^{3+}$ in site A to a certain range of 35 to 50% and the content of $Fe^{2+}$ in site B to a certain range of 30 to 45%, appropriate resistance and magnetization can be achieved, and a ferromagnetic material powder having an appropriate image density and causing no carrier adhesion or leak phenomenon in development can be obtained.

In the ferromagnetic material powder of the present invention, the content of hematite in the surface layer is desirably 90% or less. When the ratio of generation of hematite is 90% or more, disadvantageously the resistance of the carrier core becomes too high, and image density is difficult to achieve in development. Also, since the nonmagnetic hematite phase increases, magnetization of particles tends to be ill-balance of the magnetization, and carrier adhesion disadvantageously increases in development.

The content of hematite in the surface layer is measured by conversion electron spectroscopy, which is one type of the Moessbauer spectroscopy. In the method, the content of hematite is measured several hundred nanometers below the surface under the following measurement conditions.

- Measurement sample: a thin layer of vacuum grease is applied to an A1 board and a small amount of a sample is sprayed thereon, and the resultant is set in a sample cell.
- Transition used: transition of $^{57}Fe$ from ground state to lowest excitation state
- Environment of measurement of sample: constant acceleration mode, room temperature, normal pressure, He 90%-$CH_4$ 10% gas

- γ ray source: $^{57}$Co/Rh matrix

The ferromagnetic material powder of the present invention has a ratio of scattering magnetization to main magnetization of preferably 0.8 or more. A ratio of scattering magnetization to main magnetization of lower than 0.8 is not preferred because beads carry over increases in development.

Herein, the ratio of scattering magnetization to main magnetization can be calculated by the following. $X_0$: main magnetization before scattering test [A·m$^2$/kg (emu/g) ] X: magnetization of scattered powder [A·m$^2$/kg(emu/g)] $X/X_0$: ratio of scattering magnetization to main magnetization

Herein, the scattering test is carried out as follows. Specifically, 600 g of a ferromagnetic material powder is put in a commercially available development box for a copying machine and stirred with a motor at a rotation number of 158 rpm for 10 minutes, and the sample scattered in the development box is collected to determine the magnetization of the scattered powder at 5 kOe.

Preferably, the ferromagnetic material powder of the present invention contains a group 2 element in the periodic table as an element constituting the ferrite phase. The group 2 element in the periodic table has small specific gravity, and so when used as a carrier, the carrier has small stress and can have high durability. In particular, Mg and Ca are preferred. Although alkaline metal elements in addition to the above elements, such as Li, K and Rb also have small specific gravity, they are not preferred because when they are present in the ferrite phase, the environmental dependence of the charging amount is significantly deteriorated.

Preferably, the ferromagnetic material powder of the present invention contains Sr and/or Ba as an element constituting the magnetoplumbite crystal structure. The content of the element is preferably 0.05 to 5.0%.by mole, particularly preferably 0.35 to 3.0% by mole. When the content is less than 0.05% by mole, the ratio of scattering magnetization to main magnetization increases, and in development, carrier adhesion increases. A content of Sr and/or Ba of more than 5.0% by mole is not preferred because residual magnetization and coercive force increase, resulting in aggregation of magnetic particles.

The ferromagnetic material powder of the present invention has a raw material slurry particle size ($D_{50}$) of preferably 1.0 μm or less, more preferably 0.2 to 0.7 μm. When the raw material slurry particle size ($D_{50}$) is more than 1.0 μm, the ferromagnetic material powder has greater unevenness of surface properties among particles, and use thereof as a carrier core is not preferred. The raw material slurry particle size ($D_{50}$) is measured by the method of measurement of average particle size described later.

Also, the ferromagnetic material powder of the present invention has a strength of preferably 75% or more, more preferably 85% or more. When the strength is less than 75% and the powder is used as a carrier core, carrier particles are crushed in an actual machine due to stress of stirring, and the crushed particles disadvantageously cause beads carry over.

Herein, the strength test is carried out as follows. First, a sample of the ferromagnetic material powder is measured by Microtrac Particle SizeAnalyzer "Model 9320-X100" made by Nikkiso Co., Ltd. to determine an average particle size $D_{50}$ (μm) value (S) . Subsequently, the same ferromagnetic material powder sample is put in a 200 ml measuring cylinder up to a gauge of 100 ml by patting, the mass is measured, and the powder is put on a plate for hardness test with 15 polished rigid balls with a diameter of 12.7 mm or a diameter of 9.5 mm. Herein, the plate for hardness test in accordance with JIS K1474 is used. The plate is attached to a sieve shaker and shaking is performed for 30 minutes, and rigid balls are removed. The resulting sample is measured by Microtrac Particle Size Analyzer "Model 9320-X100" made by Nikkiso Co., Ltd. to determine the average particle size $D_{50}$ (μm) (K). The strength (%) is calculated by the following formula. The average particle size $D_{50}$ is measured as described below.

$$\texttt{Strength (\%) = K/S × 100}$$

The ferromagnetic material powder of the present invention has a saturation magnetization of preferably 30 to 80 A.m$^2$/kg(emu/g), particularly preferably 40 to 70 A·m$^2$/kg(emu/g). When the ferromagnetic material powder is used as a carrier and has a saturation magnetization of more than 80 A·m$^2$/kg(emu/g), the magnetic brush becomes hard and therefore brush marks are produced or roughness is caused, failing to give high quality developed images. When the saturation magnetization is less than 30 A·m$^2$/kg(emu/g), magnetic particles come off from the magnetic brush because the magnetic force is too low, and disadvantageously beads carry over occurs. The saturation magnetization in the present invention is measured using B-H Tracer (BHU-60) made by Riken Denshi Co., Ltd.

The ferromagnetic material powder of the present invention has an average particle size of preferably 20 to 100 μm, particularly preferably 25 to 50 μm. When a ferromagnetic material powder having an average particle size of more than 100 μm is used as a carrier, the carrier has a smaller specific surface area and toner scattering and fog are increased, failing to give high quality images. When the average particle size is less than 20 μm, disadvantageously

magnetization per carrier particle decreases and beads carry over to photoconductor occurs. The average particle size is measured as follows.

[Average particle size]

The average particle size is measured by a laser diffraction scattering method. Microtrac Particle Size Analyzer "Model 9320-X100" made by Nikkiso Co., Ltd. is used as the measurement device. The average particle size is measured in an environment of $25 \pm 5^{\circ}$C and a humidity of $55 \pm 15\%$. The refractive index is 1. 81. The average particle size herein described is cumulative 50% particle size ($D_{50}$) in a volume distribution mode shown based on screens. A carrier sample is dispersed in a 0.2% sodium hexametaphosphate aqueous solution as a dispersion medium by ultrasonic treatment for 1 minute with a ultrasonic homogenizer (UH-3C) made by Ultrasonic Engineering Co., Ltd.

The ferromagnetic material powder of the present invention has a resistance of preferably $1.0 \times 10^6$ to $1.0 \times 10^{11}$ $\Omega$. In particular, the ferromagnetic material powder treated with surface oxidization has a resistance of preferably $1.0 \times 10^8$ to $1.0 \times 10^{11}$ $\Omega$. In a development system in which alternating field is applied for high quality images, a core with high resistance is required, and a ferromagnetic material powder treated with surface oxidization is particularly preferred. Use of a ferromagnetic material powder having a core resistance of higher than $1.0 \times 10^{11}$ $\Omega$ as a carrier is not preferred because image density is difficult to achieve. A core resistance of less than $1.0 \times 10^6$ $\Omega$ is not preferred either, because a leak phenomenon tends to occur and high quality images cannot be obtained.

The method of measuring resistance is as follows. Specifically, the north pole and the south pole are faced at a magnetic pole distance of 6.5 mm, 200 mg of a sample is weighed and a non-magnetic parallel plate electrode (area $10 \times 40$ mm) is put therein. Magnetic poles (surface inductive flux: 1500 Gauss, magnetic pole facing area: $10 \times 30$ mm) are attached to the parallel plate electrode to hold the sample between the electrodes, and the resistance at an applied voltage of 250 V is measured by an insulation resistance meter.

Theprocess for producing a ferromagnetic material powder of the present invention is now described. First, hematite ($Fe_2O_3$) and each oxide containing an element capable of giving magnetoplumbite ferrite are mixed in appropriate amounts. At this stage, to produce magnetite in baking, the amount of hematite is preferably larger than the stoichiometric quantity. As a raw material in addition to hematite, a group 2 element in the periodic table is preferably contained. In particular, the raw materials preferably include oxide containing Sr and/or Ba.

The raw materials appropriately mixed are pulverized to a slurry particle size ($D_{50}$) of 1.0 $\mu$m or less, preferably 0.2 to 0.7 $\mu$m in a wet ball mill, a wet vibrating mill or the like, and then a dispersant, a defoaming agent, a binder or the like is added thereto according to need to adjust the viscosity, and the mixture is granulated and dried. A slurry particle size ($D_{50}$) of more than 1. 0 $\mu$m is not preferred because the carrier core has greater unevenness of surface properties among particles.

When the apparent density is to be increased, a pre-baking step may be performed. Specifically, the raw materials mixed in appropriate amounts are pulverized and mixed in a wet or dry ball mill, sand mill, vibrating mill or the like for 1 hour or more, preferably 1 to 20 hours. The slurry thus obtained is dried and pulverized, and then further pre-baked at a temperature of 700 to 1200$^{\circ}$C. After pre-baking, the raw materials are pulverized to a slurry particle size ($D_{50}$) of 1.0 $\mu$m or less, preferably 0.2 to 0.7 $\mu$m in a wet ball mill, a wet vibrating mill or the like, and then a dispersant, a defoaming agent, a binder or the like is added thereto according to need to adjust the viscosity, and the mixture is granulated and dried. In the case where the pre-baking step is also included, a slurry particle size of more than 1.0 $\mu$m is not preferred either, because the carrier core has greater unevenness of surface properties among particles.

Subsequently, binder removing treatment is performed in air at 600 to 700$^{\circ}$C for 2 to 4 hours. Such binder removing treatment is performed so as to prevent the strength of the ferromagnetic material powder being reduced.

Next, the granulate after binder removing treatment is maintained at 1100 to 1400$^{\circ}$C for 1 to 24 hours to perform main baking. The main baking is performed in an inert gas atmosphere with an oxygen concentration of less than 0.1% by volume, preferably 0.05% by volume or less. In the main baking, the excess hematite is formed into magnetite and the magnetite phase and the ferrite phase coexist homogeneously in a particle. A baking atmosphere with an oxygen concentration of 0.1% by volume or more is not preferred because the hematite phase increases, the magnetite phase and the ferrite phase cannot coexist homogeneously in a particle and the magnetization of particles becomes ill-balance of the magnetization.

The baked product thus obtained is cracked and classified so as to be adjusted to a desired particle size. Further, the magnetization and the resistance of the ferromagnetic material powder can be adjusted by subjecting the ferromagnetic material powder to surface oxidization treatment in air or an atmosphere in which the concentration of oxygen is controlled. As the surface oxidization treatment, a rotary kiln system is preferred, and a higher treatment temperature leads to higher resistance. However, when the temperature is too high, the resistance of the carrier core becomes too high, and this is not preferred because image density is difficult to achieve in development. Also, when the ratio of generation of hematite increases and is higher than 90%, the magnetization of particles becomes ill-balance of the magnetization and beads carry over occurs in development. However, since the ferromagnetic material powder of the present invention has a content of hematite in the surface layer of 90% or less, the magnetization of particles does not become ill-balance of the magnetization in this content range even if the resistance is adjusted to a desired value by surface oxidization treatment, and therefore carrier adhesion or a leak phenomenon does not occur when used for an electrophotographic developer, and high quality images can be obtained.

Further, although the ferromagnetic material powder of the present invention thus obtained can be used as a carrier for an electrophotographic developer as it is, preferably the ferromagnetic material powder is used as a carrier for an electrophotographic developer after coating the surface of the ferromagnetic material powder as a carrier core with a resin.

The resin used for coating of the carrier core is not particularly limited, and various resins can be used. For apositivelychargedtoner, fluorineresins, fluorine-acrylic resins, silicone resins and modified silicone resins, for example, can be used. On the other hand, for a negatively charged toner,acrylic resins,acrylic-styrene resins,a mixed resin of an acrylic-styrene resin and a melamine resin, cured resins thereof, silicone resins, modified silicone resins, polyester resins, epoxy resins, urethane resins and polyethylene resins, for example, can be used.

Further, a charge control agent, an adhesiveness improving agent, a primer treating agent, a resistance control agent or the like may be added according to need. Examples of charge control agents and resistance control agents include various silane coupling agents, various titanium coupling agents, conductive carbon, boride such as titanium boride and oxides such as titanium oxide, iron oxide, aluminum oxide, chromium oxide and silicon oxide, but the agents are not particularly limited thereto.

The amount of coating of the resin is preferably 0.05 to 10.0% by weight, particularly preferably 0.5 to 7.0% by weight based on the carrier core. When the amount of coating is less than 0.05% by weight, it is difficult to form a uniform coating layer on the surface of the carrier. When the amount of coating is more than 10.0% by weight, the carrier itself is cohered.

Also, as a method of coating of the resin, generally the resin is diluted with a solvent and applied to the surface of the carrier core. Examples of solvents herein used include toluene, xylene, cellosolve butyl acetate, methyl ethyl ketone, methyl isobutyl ketone and methanol when the resin is soluble in an organic solvent, or water when the resin is a water-soluble resin or an emulsion resin. As the method of coating the carrier core with such a resin, coating can be performed by a known method, for example, a brush method, a dry method, a spray dry system with a fluidized bed, a rotary dry system or a dipping/drying method by a universal stirrer. To improve the coating ratio, the method with a fluidized bed is preferred.

When the carrier core is coated with a resin and baked, external heating or internal heating may be employed. For example, a fixed or fluidized bed electric furnace, a rotary electric furnace, a burner furnace or microwave may be used. The baking temperature varies depending on the resin to be used. The temperature must be the melting point or the glass transition temperature or higher. For thermosetting resins, condensed crosslinked resins and the like, the temperature needs to be increased so that curing proceeds sufficiently.

After the surface of the carrier core is coated with a resin and baked as described above, the carrier core is cooled, cracked and the particle size thereof is controlled to give a resin-coated carrier.

The carrier of the present invention obtained as described above is mixed wi th toner and used as a two-component developer.

The toner used in the present invention can be produced by a known method such as suspension polymerization, emulsion polymerization or pulverization. For preparing such toner, a binder resin, a colorant, a charge control agent and the like are sufficiently mixed by a mixer such as a Henschel mixer, melt-kneaded and uniformly dispersed in a twin-screw extruder or the like and cooled, finely pulverized by a jet mill or the like and classified by, for example, an air classifier to give a toner having a desired particle size. Wax, magnetic powder, a viscosity control agent or other additives may also be added according to need. In addition, an external additive or the like may be added after classification.

The binder resin used for the toner is not particularly limited. Resins such as polystyrene, chloropolystyrene, styrene-chlorostyrene copolymers,styrene-acrylic acid ester copolymers, styrene-methacrylic acid copolymers, rosin modified maleic acid resins, epoxy resins, polyester resins, polyethylene resins, polypropylene resins, polyurethane resins and silicone resins are used alone or in a mixture according to need.

Examples of charge control agents that can be used for the toner include nigrosine dyes, quaternary ammonium salts, organic metal complexes, chelate complexes and metal-containing monoazo dyes.

As the colorant used for the toner, conventionally known dyes and/or pigments can be used. For example, carbon black, phthalocyanine blue, permanent red, chromium yellow and phthalocyanine green may be used.

Silica, titanium oxide, barium titanate, fluorine resin fine particles or acrylic resin fine particles may also be used alone or in combination as other external additives.

The present invention is described in detail below with reference to Examples.

[Example 1]

As shown in Table 1, 20.0 mol% of MgO, 0.5 mol% of SrO and 80.0 mol% of $Fe_2O_3$ were pulverized in a wet bead mill for 10 hours. The result of measurement of the slurry particle size ($D_{50}$) of the resulting slurry was 0.334 $\mu$m. Appropriate amounts of a dispersant, a defoaming agent and a binder were added to the slurry and the mixture was granulated and dried with a spray dryer. After binder removing treatment in a rotary kiln in air at 650°C for 3 hours, the mixture was kept in an inert atmosphere (oxygen concentration 0.05% by volume or less) in an electric furnace at 1270°C for 4 hours to perform main baking. Then the resultant was cracked and classified to give a ferromagnetic material powder having an average particle size of 35 $\mu$m.

The resulting ferromagnetic material powder was measured by Moessbauer spectroscopy to determine the content of $Fe^{3+}$ in site A, the content of $Fe^{2+}$ in site B and the content of $Fe_2O_3$ (hematite) in the particle surface layer. Further, a scattering test of the ferromagnetic material powder was performed to determine the ratio ($X/X_0$) of scattering magnetization to main magnetization. Also, the resistance of the ferromagnetic material powder was measured at an applied voltage of 250 V. The results are shown in Table 2.

A silicone resin (product name: SR-2411, solid content 20% by weight, available from Dow Corning Toray Silicone Co. , Ltd.) was dissolved in a toluene solvent and applied to the ferromagnetic material powder as a carrier core in an amount of 1.0% by weight with a fluidized bed. The carrier core was baked at 250°C for 3 hours and a carrier coated with the resin was obtained.

The average particle size, saturation magnetization and resistance at an applied voltage of 250 V of the carrier thus obtained were measured by the measurement devices described above. The results are shown in Table 2.

Further, a developer having a toner concentration of 7.0% by weight was prepared using the above-described carrier and a magenta toner for full color copying machine FANTASIA 22i made by TOSHIBA TEC CORPORATION in T-FC22M as a toner. The magenta station alone in the full color copying machine FANTASIA 22i made by TOSHIBA TEC CORPORATION was used to evaluate the image density, white spots (amount of carrier adhesion) and halftone white streak in initial actual printing in an actual machine by the following evaluation methods. The evaluation on actual machine was performed in an N/N environment (23°C, 55%RH) The results are shown in Table 2.

(1) Method of evaluation of image density

The image density (I.D.) of solid portions was measured by Macbeth densitometer RD-918 and ranked as follows.

◎ : I.D. is higher than 1.80, excellent reproduction of the densityof the original copy, no density unevenness and uniform solid printing

○ : I.D. is higher than 1.65 to 1.80, good reproduction of the density of the original copy, no density unevenness

Δ : I.D. is higher than 1.50 to 1.65, moderate reproduction of the density of the original copy, practically usable

× : I.D. is higher than 1.40 to 1.50, low density, uneven images

×× : I.D. is 1.40 or less, low density as a whole, high edge effect, significant reduction of the density compared to the density of the original copy

(2) Method of evaluation of white spot (carrier adhesion)

The beads carry over on the image, namely, the level of white spots was evaluated and ranked.

◎ : no spot in 10 sheets of A3 paper

○ : 1 to 5 spots in 10 sheets of A3 paper

Δ : more than 5 spots in 10 sheets of A3 paper and 3 spots or less in 3 sheets of A3 paper

× : more than 5 to 10 spots in 3 sheets of A3 paper

×× : more than 10 spots in 3 sheets of A3 paper

(3) Method of evaluation of halftone white streak

When a leak phenomenon occurs in development, halftone white streaks are formed on images. The level of halftone white streaks was evaluated and ranked.

◎ : no streak in A3 paper

○ : 1 to 3 small white streaks in A3 paper

Δ : more than 3 to 10 small white streaks in A3 paper

× : more than 10 white streaks in A3 paper

×× : many white streaks in A3 paper including some white voids

[Example 2]

As shown in Table 1, 20.0 mol% of MgO, 0.5 mol% of SrO and 80.0 mol% of $Fe_2O_3$ were pulverized in a wet bead mill for 10 hours. The result of measurement of the slurry particle size ($D_{50}$) of the resulting slurry was 0.334 $\mu$m. Appropriate amounts of a dispersant, a defoaming agent and a binder were added to the slurry and the mixture was granulated and dried wi th a spray dryer. After binder removing treatment in a rotary kiln in air at 650˚C for 60 minutes, the material was kept in an inert atmosphere (oxygen concentration: 0.05% by volume or less) in an electric furnace at 1270˚C for 4 hours to perform main baking. Then, the resultant was deagglomerated and classified to an average particle size of 35 $\mu$m and subjected to surface oxidization treatment in a rotary kiln at 650˚C in air to give a ferromagnetic material powder.

A carrier for an electrophotographic developer and a developer were prepared using the ferromagnetic material powder in the same manner as in Example 1 . Physical properties of the ferromagnetic material powder, the carrier for an electrophotographic developer and the developer and image characteristics were evaluated. The results are shown in Table 2.

[Example 3]

A ferromagnetic material powder was prepared in the same manner as in Example 1 except that 25.0 mol% of MgO, 2.5 mol% of CaO, 0.5 mol% of SrO and 72.5 mol% of $Fe_2O_3$ were used as shown in Table 1. The resulting slurry has a slurry particle size ($D_{50}$) of 0.215 $\mu$m.

A carrier for an electrophotographic developer and a developer were prepared using the ferromagnetic material powder in the same manner as in Example 1 . Physical properties of the ferromagnetic material powder, the carrier for an electrophotographic developer and the developer and image characteristics were evaluated. The results are shown in Table 2.

[Example 4]

A ferromagnetic material powder was prepared in the same manner as in Example 1 except that 5.0 mol% of MgO, 0.5 mol% of SrO and 95.0 mol% of $Fe_2O_3$ were used and the main baking was performed at a temperature of 1330˚C as shown in Table 1. The resulting slurry has a slurry particle size ($D_{50}$) of 0.425 $\mu$m.

A carrier for an electrophotographic developer and a developer were prepared using the ferromagnetic material powder in the same manner as in Example 1 . Physical properties of the ferromagnetic material powder, the carrier for an electrophotographic developer and the developer and image characteristics were evaluated. The results are shown in Table 2.

[Example 5]

A ferromagnetic material powder was prepared in the same manner as in Example 1 except that 45.0 mol% of MgO, 0.5 mol% of SrO and 55.0 mol% of $Fe_2O_3$ were used as shown in Table 1. The resulting slurry has a slurry particle size ($D_{50}$) of 0.319 $\mu$m.

A carrier for an electrophotographic developer and a developer were prepared using the ferromagnetic material powder in the same manner as in Example 1 . Physical properties of the ferromagnetic material powder, the carrier for an electrophotographic developer and the developer and image characteristics were evaluated. The results are shown in Table 2.

[Example 6]

A ferromagnetic material powder was prepared in the same manner as in Example 1 except that the time of pulverization in the wet bead mill was set to 1 hour, PVA was added thereto as a sintering aid in amount of 1.1% by weight based on carbon atoms, the binder removing step was not performed and the baking temperature was set to 1210˚C in the production process as shown in Table 1. The resulting slurry has a slurry particle size ($D_{50}$) of 1.221 $\mu$m.

A carrier for an electrophotographic developer and a developer were prepared using the ferromagnetic material powder in the same manner as in Example 1 . Physical properties of the ferromagnetic material powder, the carrier for an electrophotographic developer and the developer and image characteristics were evaluated. The results are shown in Table 2.

[Example 7]

A ferromagnetic material powder was prepared in the same manner as in Example 2 except that the temperature of the surface oxidization treatment was set to 1000°C as shown in Table 1. The resulting slurry has a slurry particle size ($D_{50}$) of 0.334 $\mu$m.

A carrier for an electrophotographic developer and a developer were prepared using the ferromagnetic material powder in the same manner as in Example 1 . Physical properties of the ferromagnetic material powder, the carrier for an electrophotographic developer and the developer and image characteristics were evaluated. The results are shown in Table 2.

[Comparative Example 1]

A ferromagnetic material powder was prepared in the same manner as in Example 1 except that 3.0 mol % of MgO, 0.5 mol% of SrO and 97.0 mol% of $Fe_2O_3$ were used and the baking temperature was set to 1360°C as shown in Table 1. The resulting slurry has a slurry particle size ($D_{50}$) of 0.311 $\mu$m.

A carrier for an electrophotographic developer and a developer were prepared using the ferromagnetic material powder in the same manner as in Example 1 . Physical properties of the ferromagnetic material powder, the carrier for an electrophotographic developer and the developer and image characteristics were evaluated. The results are shown in Table 2.

[Comparative Example 2]

A ferromagnetic material powder was prepared in the same manner as in Example 1 except that 48.0 mol% of MgO, 0.5 mol% of SrO and 52.0 mol% of $Fe_2O_3$ were used as shown in Table 1. The resulting slurry has a slurry particle size ($D_{50}$) of 0.411 $\mu$m.

A carrier for an electrophotographic developer and a developer were prepared using the ferromagnetic material powder in the same manner as in Example 1. Physical properties of the ferromagnetic material powder, the carrier for an electrophotographic developer and the developer and image characteristics were evaluated. The results are shown in Table 2.

[Comparative Example 3]

A ferromagnetic material powder was prepared in the same manner as in Example 1 except that 25.0 mol% of MgO, 2.5 mol% of CaO, 0.5 mol% of SrO and 72.5 mol% of $Fe_2O_3$ were used and the baking atmosphere contained 4% of oxygen as shown in Table 1 . The resulting slurry has a slurry particle size ($D_{50}$) of 0.215 $\mu$m.

A carrier for an electrophotographic developer and a developer were prepared using the ferromagnetic material powder in the same manner as in Example 1. Physical properties of the ferromagnetic material powder, the carrier for an electrophotographic developer and the developer and image characteristics were evaluated. The results are shown in Table 2.

Table 1

| | Compound (mol%) | | | | Step | | | | | |
|---|---|---|---|---|---|---|---|---|---|---|
| | MgO | CaO | Fe$_2$O$_3$ | SrO | Amount added of sintering aid C (wt%) | slurry particle size D$_{50}$ ($\mu$m) | Binder removing step | Baking condition | | Temperature (˚C) of surface of surface oxidization treatment |
| | | | | | | | | Temperature (˚C) | Atmosphere | |
| Ex. 1 | 20.0 | | 80.0 | 0.5 | None | 0.334 | Included | 1270 | N$_2$ atmosphere | 0 |
| Ex. 2 | 20.0 | | 80.0 | 0.5 | None | 0.334 | Included | 1270 | N$_2$ atmosphere | 650 |
| Ex. 3 | 25.0 | 2.5 | 72.5 | 0.5 | None | 0.215 | Included | 1270 | N$_2$ atmosphere | 0 |
| Ex. 4 | 5.0 | | 95.0 | 0.5 | None | 0.425 | Included | 1330 | N2 atmosphere | 0 |
| Ex. 5 | 45.0 | | 55.0 | 0.5 | None | 0.319 | Included | 1270 | N$_2$ atmosphere | 0 |
| Ex. 6 | 20.0 | | 80.0 | 0.5 | 1.1 | 1.221 | Not included | 1210 | N$_2$ atmosphere | 0 |
| Ex. 7 | 20.0 | | 80.0 | 0.5 | None | 0.334 | Included | 1270 | N2 atmosphere | 1000 |
| Comp. Ex. 1 | 3.0 | | 97.0 | 0.5 | None | 0.311 | Included | 1360 | N$_2$ atmosphere | 0 |
| Comp. Ex. 2 | 48.0 | | 52.0 | 0.5 | None | 0.411 | Included | 1270 | N$_2$ atmosphere | 0 |
| Comp. Ex. 3 | 25.0 | 2.5 | 72.5 | 0.5 | None | 0.215 | Included | 1270 | O$_2$=4% | 0 |

Table 2

| | Component analysis | | | Characteristics of core | | | Characteristics of carrier | | | Characteristics on actual machine | | |
|---|---|---|---|---|---|---|---|---|---|---|---|---|
| | Moessbauer transmission method | | Content of $Fe_2O_3$ in particle surface by Moessbauer conversion electron spectroscopy | Ratio $(X/X_0)$ of scattering magnetization to main magnetization | Core resistance $(\Omega)$ | Core strength | Magnetization $(Am^2/k_9)$ | Average particle size $(\mu m)$ | Carrier resistance $(\Omega)$ | Image density | White spot (carrier adhesion) | Halftone white streak (leak phenomenon) |
| | Content of $Fe^{3+}$ in site in A | Content of $Fe^{2+}$ site B | | | | | | | | | | |
| Ex. 1 | 39.0 | 37.7 | 0.00 | 0.90 | $2.8 \times 10^8$ | 89.9 | 70 | 35.04 | $3.0 \times 10^9$ | ◎ | ◎ | ○ |
| Ex. 2 | 39.2 | 37.1 | 0.65 | 0.87 | $8.0 \times 10^9$ | 89.5 | 67 | 35.78 | $5.0 \times 10^{10}$ | ○ | ◎ | ○ |
| Ex. 3 | 41.6 | 37.0 | 0.00 | 0.89 | $5.5 \times 10^8$ | 90.2 | 64 | 34.65 | $4.0 \times 10^9$ | ○ | ◎ | ○ |
| Ex. 4 | 48.1 | 41.5 | 0.00 | 0.95 | $4.0 \times 10^6$ | 87.3 | 80 | 36.09 | $8.0 \times 10^8$ | ◎ | ○ | △ |
| Ex. 5 | 38.9 | 32.6 | 0.00 | 0.85 | $3.5 \times 10^9$ | 92.9 | 40 | 38.40 | $4.0 \times 10^{10}$ | △ | △ | ◎ |
| Ex. 6 | 41.5 | 39.5 | 0.00 | 0.92 | $8.5 \times 10^7$ | 74.3 | 72 | 34.52 | $1.2 \times 10^9$ | ◎ | × | ○ |
| Ex. 7 | 39.2 | 37.1 | 1.21 | 0.60 | $6.8 \times 10^{11}$ | 88.6 | 34 | 34.43 | $3.6 \times 10^{12}$ | × | △ | ◎ |
| Com p. Ex. 1 | 52.0 | 46.0 | 0.00 | 0.96 | $8.0 \times 10^5$ | 86.1 | 82 | 38.20 | $3.4 \times 10^6$ | ◎ | △ | ×× |
| Com p. Ex. 2 | 34.2 | 31.0 | 0.00 | 0.82 | $9.0 \times 10^9$ | 93.8 | 29 | 34.51 | $1.0 \times 10^{11}$ | △ | ×× | ○ |
| Com p. Ex. 3 | 62.7 | 0.0 | 0.93 | 0.17 | $8.5 \times 10^9$ | 90 | 60 | 34.91 | $8.7 \times 10^{10}$ | × | ×× | △ |

As is evident from the results in Table 1, in Examples 1 to 5 in which the ferromagnetic material powder of the present invention is used as a core, carrier characteristics such as the ratio of scattering magnetization to main magnetization, the core resistance and the strength can be maintained at high levels, and in the evaluation of developer characteristics on an actual machine, all of the image density, the amount of beads Carry over and the halftone white streak which is the evaluation criteria of image based on a leak phenomenon were good.

Also, although beads carry over occurred in the evaluation of developer characteristics on an actual machine in Example 6 in which a sintering aid was used and binder removing treatment was not performed, the product satisfies the practically usable level. Although the carrier resistance as a carrier characteristic is too high and the image density is inferior and beads Carry over occurred in evaluation of developer characteristics on an actual machine in Example 7 in which the ratio of generation of hematite in the surface layer is more than 90%, the product satisfies the practically usable level as in Example 6.

Contrary to these, in Comparative Example 1 to 3 in which ferromagnetic material powders in which the ratio of generation of $Fe^{3+}$ in site A and the ratio of generation of $Fe^{2+}$ in site B are each out of a specific range are prepared, beads carry over or a leak phenomenon occurred in the evaluation of developer characteristics on an actual machine, failing to satisfy both characteristics, and the product does not satisfy the practically usable level. Moreover, in Comparative Example 1, as for the carrier characteristics, the magnetization is too high and the carrier resistance is low. In Comparative Example 2, as for the carrier characteristics, the magnetization is too low.

The ferromagnetic material powder according to the present invention comprises a magnetic oxide which is a complex of a magnetite phase and a ferrite phase, wherein the ferromagnetic material powder has a spinel crystal structure and a magnetoplumbite crystal structure and the content of $Fe^{3+}$ in site A and the content of $Fe^{2+}$ in site B in the spinel crystal structure are in certain ranges, and therefore the ratio of scattering magnetization to main magnetization, the core resistance and the strength can be maintained at high levels when formed into a core. Accordingly, in an electrophotographic developer comprising the ferromagnetic material powder of the present invention, beads carry over is suppressed and high quality images without a leak phenomenon can be obtained.

Also, the process of the present invention makes it possible to produce a ferromagnetic material powder and a carrier for an electrophotographic developer in a stable manner at a reduced cost.

Accordingly, the present invention can be preferably used for a two-component developer used in electrophotography.

## Claims

1. A ferromagnetic material powder comprising a magnetic oxide which is a complex of a magnetite phase and a ferrite phase,
   the ferromagnetic material powder having a spinel crystal structure and a magnetoplumbite crystal structure, and in the spinel crystal structure, a content of $Fe^{3+}$ in site A being 35 to 50% and a content of $Fe^{2+}$ in site B being 30 to 45%.

2. The ferromagnetic material powder according to claim 1, wherein a content of hematite in a surface layer is 90% or less.

3. The ferromagnetic material powder according to claim 1 or 2, wherein a ratio of scattering magnetization to main magnetization is 0.8 or more.

4. The ferromagnetic material powder according to claim 1, 2 or 3, further comprising a group 2 element in the periodic table as an element constituting the ferrite phase.

5. The ferromagnetic material powder according to any one of claims 1 to 4, further comprising Sr and/or Ba as an element constituting the magnetoplumbite crystal structure.

6. The ferromagnetic material powder according to any one of claims 1 to 5, wherein a raw material slurry particle size ($D_{50}$) is 1.0 $\mu$m or less.

7. The ferromagnetic material powder according to any one of claims 1 to 6, which has a strength of 75% or more.

8. The ferromagnetic material powder according to any one of claims 1 to 7, which has a saturation magnetization of 30 to 80 $A \cdot m^2/kg$ (emu/g).

9. The ferromagnetic material powder according to any one of claims 1 to 8, which has an average particle size of 20

to 100 $\mu$m.

**10.** The ferromagnetic material powder according to any one of claims 1 to 9, which has a resistance of $1.0 \times 10^6$ to $1.0 \times 10^{11}$ $\Omega$.

**11.** A carrier for an electrophotographic developer, comprising the ferromagnetic material powder according to any one of claims 1 to 10 as a core and a resin with which the surface of the ferromagnetic material powder is coated.

**12.** The carrier for an electrophotographic developer according to claim 11, wherein an amount of coating of the resin is 0.05 to 10% by weight.

**13.** A process for producing a ferromagnetic material powder, comprising pulverizing a raw material mixture containing hematite and another metal oxide to a slurry particle size ($D_{50}$) of 1.0 $\mu$m or less, granulating, performing binder removing treatment, and then baking at 1100 to 1400°C in an inert atmosphere.

**14.** The process for producing a ferromagnetic material powder according to claim 13, further comprising performing surface treatment in an oxidizing atmosphere after baking.

**15.** A process for producing a carrier for an electrophotographic developer, comprising coating the surface of the ferromagnetic material powder obtained in claim 13 or 14 with a resin.

**16.** An electrophotographic developer comprising the carrier according to claim 11 or 12 and a toner.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9134036 A

- JP 2003034533 A